# FASCICULE DE BREVET EUROPEEN

(11) **EP 1 601 930 B1**
(45) Date de publication et mention de la délivrance du brevet: **09.09.2015**
(21) Numéro de dépôt: 04718989.9
(22) Date de dépôt: 10.03.2004
(51) Int. Cl.: G01B 9/021, G03H 1/04

(54) **PROCEDE ET DISPOSITIF POUR LA GENERATION D'UNE PORTEUSE DANS UN INTERFEROGRAMME**
VERFAHREN UND VORRICHTUNG ZUR ERZEUGUNG EINES TRÄGERS IN EINEM INTERFEROGRAMM
DEVICE FOR THE GENERATION OF A CARRIER FOR AN INTERFEROGRAMME

(30) Priorité: 11.03.2003 FR 0303010
(43) Date de publication de la demande: 07.12.2005
(73) Titulaire: Centre National de la Recherche Scientifique (CNRS), 75794 Paris Cedex 16 (FR); UNIVERSITE PARIS-SUD (PARIS XI), 91405 Orsay Cédex (FR)
(72) Inventeur: ROOSEN, Gérald, F-78720 La Celle-Les-Bordes (FR); PAULIAT, Gilles, F-91940 Les Ulis (FR)
(74) Mandataire: Novagraaf Technologies
(86) Numéro de dépôt international: PCT/FR2004/000571
(87) Numéro de publication internationale: WO 2004/083793

(56) Documents cités:
- FR-A- 2 646 251
- US-A- 3 828 126
- US-A- 4 428 675
- US-A- 4 602 844
- US-A- 5 621 714
- US-B1- 6 288 986
- QUAN C ET AL: "Application of the holographic carrier fringe and FFT technique for deformation measurement" OPTICS AND LASER TECHNOLOGY, ELSEVIER SCIENCE PUBLISHERS BV., AMSTERDAM, NL, vol. 28, no. 1, 1 février 1996 (1996-02-01), pages 7-13, XP004026154 ISSN: 0030-3992

## Description

La présente invention se rapporte au domaine des interférogrammes, c'est-à-dire à l'enregistrement d'une figure d'interférence produite par la superposition de deux ondes. Elle s'applique en particulier, mais non exclusivement, à la création, ou l'obtention d'une porteuse dans les systèmes d'interférogramme dans lesquels on introduit une porteuse pour étudier et analyser les déplacements éventuels de l'objet observé.

De façon plus précise, la présente invention s'applique à l'introduction d'une porteuse dans les interférogrammes de type " interférométrie holographique en temps réel " ou de type " interférométrie holographique double exposition ".

On se sert d'interférogrammes pour mesurer, entre autres, d'infimes déformations dans des structures.

L'holographie, technique utilisée pour obtenir les interférogrammes, est une méthode d'enregistrement par interférence entre deux faisceaux de lumière cohérente. Le premier de ces faisceaux est issu de la lumière diffusée ou transmise par l'objet. Le second sert de référence. Les deux faisceaux interfèrent sur le support holographique et y enregistrent un hologramme. La relecture ultérieure de cet hologramme par le faisceau de référence reconstruit le front d'onde du premier faisceau tel qu'il était lors de l'enregistrement.

Dans l'interférométrie holographique, bien connu de l'homme du métier, dite " en temps réel ", on compare, à l'instant t1, deux fronts d'onde :
- un front d'onde enregistré préalablement sur l'hologramme à l'instant t0 et restitué par relecture de l'hologramme par un faisceau de référence ; ce front d'onde correspondant à l'image de l'objet tel qu'il était à l'instant t0.
- le front d'onde en provenance de l'objet et transmis par l'hologramme.

Ces deux fronts d'onde interfèrent sur le détecteur, par exemple une caméra mise au point sur l'objet, en produisant ainsi un interférogramme.

Dans l'interférométrie holographique, bien connu de l'homme du métier, dite " double exposition ", on compare, à l'instant t2, deux fronts d'onde :
- un front d'onde enregistré préalablement sur l'hologramme à l'instant t0 et restitué par relecture de l'hologramme par un premier faisceau de référence ; ce front d'onde correspondant à l'image de l'objet tel qu'il était à l'instant t0.
- un second front d'onde enregistré préalablement sur l'hologramme à l'instant t1 et restitué par relecture de l'hologramme par un second faisceau de référence ; ce front d'onde correspondant à l'image de l'objet tel qu'il était à l'instant t1.

Ces deux fronts d'onde interfèrent sur le détecteur, par exemple une caméra mise au point sur l'objet, en produisant ainsi un interférogramme.

Que ce soit en interférométrie "en temps réel " ou " double exposition ", l'analyse de l'interférogramme permet de remonter aux déplacements subis par la surface de l'objet entre les deux instants, t0 et t1 de la mesure.

Il existe deux techniques d'analyse des interférogrammes qui permettent de remonter à la différence de phase entre les deux fronts d'onde. La première technique concerne les techniques de décalage de phase qui nécessitent l'acquisition de plusieurs interférogrammes. La seconde technique ne nécessite qu'un seul interférogramme pour remonter à la variation de phase. Dans ce cas, pour l'analyse avec un seul interférogramme, une fréquence porteuse, ou simplement dénommée " porteuse ", doit être introduite sur l'interférogramme.

Ainsi, pour calculer la variation de phase entre les deux fronts d'onde ayant servi à l'acquisition d'un unique interférogramme, il faut introduire une " porteuse " sur l'interférogramme. Cette porteuse est obtenue en introduisant un coin d'air entre les deux fronts d'onde, c'est-à-dire en inclinant légèrement un front d'onde par rapport à l'autre. Cette inclinaison provoque une variation linéaire de la phase suivant un axe de l'image, par exemple x. Cela a pour effet d'introduire des franges dans l'interférogramme.

Si l'objet n'a pas bougé entre t0 et t1, les franges sont parallèles, perpendiculaires à l'axe x, et équidistantes suivant x. Par contre, si l'objet a bougé entre les deux expositions, les déformations de ces franges nous renseignent sur les déformations subies par l'objet observé. L'analyse de ces déformations peut s'effectuer par différentes méthodes : par Transformée de Fourier, par interpolation des franges, etc....

Les systèmes utilisés pour créer cette porteuse sont, par exemple, de type électro-optique ou de type mécanique en déplaçant un miroir sur le faisceau de référence dans le cas de l'interférométrie " en temps réel " ou l'un des deux faisceaux de référence dans le cas de l'interférométrie " double exposition ". Ces systèmes nécessitent en conséquence un moyen de commande. Ces systèmes sont donc coûteux et présentent par ailleurs l'inconvénient de ne pas pouvoir être envisagés lorsque le matériau holographique étudié est trop épais.

On connaît également dans l'état de la technique la publication QUAN C ET AL (« Application of the holographic carrier fringe and FFT technique for deformation measurement », OPTICS AND LASER TECHNOLOGY ELSEVIER SCIENCE PUBLISHERS BV., AMSTERDAM, NL, vol. 28, no. 1, 1 février 1996, pages 7-13, XP004026154, ISSN : 0030-3992/s) décrivant une application d'holographie par génération d'une porteuse pour la mesure de déformation.

La présente invention entend remédier aux inconvénients de l'art antérieur en proposant un système dans lequel aucun déplacement n'est plus nécessaire pour générer la porteuse.

Elle propose à cet effet un procédé pour la génération d'une porteuse dans un interférogramme, dans un dispositif d'interférométrie.

Pour l'interférométrie " en temps réel ", le procédé comprend une première étape d'enregistrement, sur un hologramme, d'un front d'onde en provenance d'un objet. Lors d'une seconde étape, ce front d'onde est restitué par relecture de l'hologramme par un faisceau de référence. Simultanément, ce front d'onde se superpose à un nouveau front d'onde en provenance de l'objet observé.

Pour l'interférométrie " double exposition ", le procédé comprend une première étape d'enregistrement, sur un hologramme, d'un front d'onde en provenance d'un objet. Il comprend une seconde étape, d'enregistrement, sur l'hologramme, d'un nouveau front d'onde en provenance de l'objet. Ces deux fronts d'onde sont restitués par relecture de l'hologramme par deux faisceaux de référence et se superposent. Ainsi, le second front d'onde est obtenu, dans le cas de l'interférométrie « double exposition », par enregistrement d'un nouveau front d'onde en provenance de l'objet.

Le procédé est caractérisé en ce que les deux susdits fronts d'onde sont polarisés orthogonalement, soit naturellement soit par une étape de modification, et en ce qu'il comprend une étape de passage de ces deux fronts d'onde polarisés orthogonalement par un cristal biréfringent, un polariseur et un détecteur afin de faire interférer lesdits deux fronts d'onde.

Selon un premier mode d'exécution de l'invention, l'étape de modification consistera en la modification de l'onde en provenance de l'objet ou de l'onde du faisceau de référence dans le cas de l'interférométrie en " en temps réel. ", ou de l'un des deux faisceaux de référence dans le cas de l'interférométrie " double exposition ", grâce à un commutateur électro-optique ; cette modification de la polarisation d'une de ces ondes ayant lieu après l'enregistrement de l'hologramme.

Selon un second mode d'exécution de l'invention, qui s'applique à l'interférométrie " en temps réel ", dans le cas où la polarisation est obtenue naturellement, le matériau holographique utilisé dans le dispositif d'interférométrie est un matériau anisotrope qui autorise les processus de diffraction anisotrope, à savoir que la polarisation du front d'onde reconstruit par diffraction du faisceau de référence sur l'hologramme est orthogonale à la polarisation du faisceau de référence et à celle du faisceau en provenance de l'objet.

La présente invention se rapporte également au dispositif d'interférométrie pour la mise en oeuvre de ce procédé pour la génération d'une porteuse dans un interférogramme, de type « interférométrie holographique en temps réel » ou de type "interférométrie holographique double exposition ", ce procédé comprenant une première étape d'enregistrement, sur un hologramme, d'un premier front d'onde en provenance d'un objet, la génération d'un second front d'onde, les deux fronts d'onde, polarisés orthogonalement, étant superposés, ce dispositif comprenant une pluralité d'objectifs, ou lentilles, au moins un polariseur sur lequel sont projetés les polarisations des deux fronts d'onde, au moins un milieu holographique, au moins un détecteur, caractérisé en ce que ce dispositif comprend un cristal biréfringent ; les deux fronts d'onde passant par ledit cristal et le polariseur afin de faire interférer lesdits deux fronts d'onde sur le détecteur.

Selon une possibilité offerte par l'invention, pour réaliser l'étape de modification de l'onde en provenance de l'objet ou de l'onde du faisceau de référence, le dispositif comprend un commutateur électro-optique.

Selon un mode d'exécution de l'invention, le cristal biréfringent se présentera sous la forme d'un biprisme biréfringent situé au voisinage d'un plan image, du point de vue optique, de l'objet observé.

Selon un second mode d'exécution de l'invention, le cristal biréfringent se présentera sous la forme d'une lame biréfringente. Dans ce cas, la lame biréfringente sera idéalement située à l'infini, d'un point de vue optique, par rapport à l'objet observé.

On comprendra mieux l'invention à l'aide de la description, faite ci-après à titre purement explicatif, et dans le cas de l'interférométrie " en temps réel ", d'un mode de réalisation de l'invention, en référence aux figures annexées :
- la figure 1 illustre une vue schématique d'un premier mode de réalisation du dispositif selon l'invention ;
- la figure 2 illustre une vue schématique d'un second mode - de réalisation du dispositif selon l'invention ;
- la figure 3 illustre de façon plus précise une partie de la figure 2;
- la figure 4 illustre une coupe schématique de la lame biréfringente utilisée dans le second mode de réalisation.

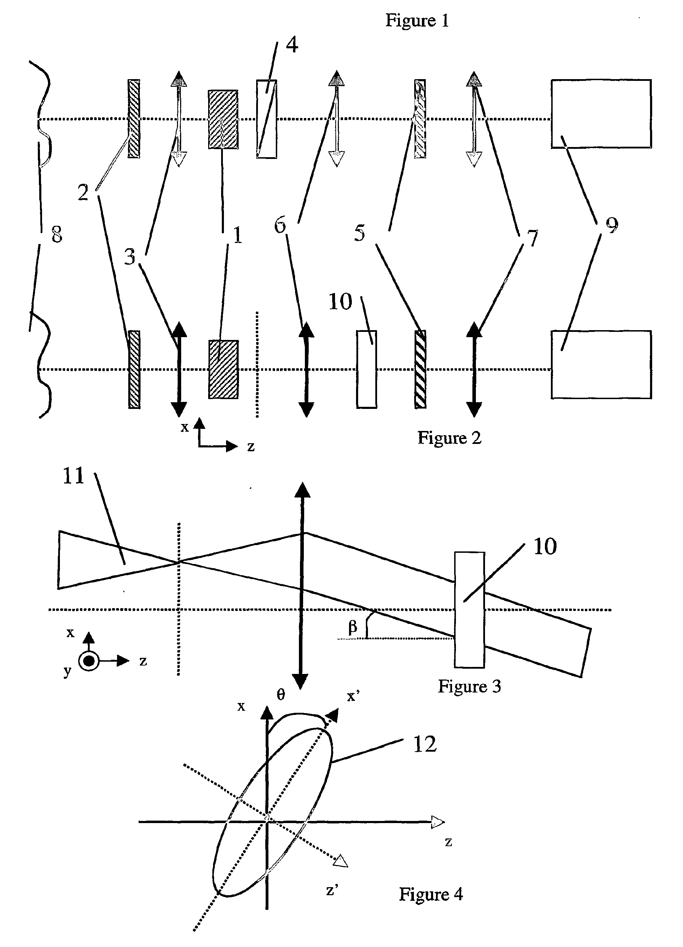

Un premier mode de réalisation du dispositif selon l'invention est représenté sur la figure 1 tandis qu'un second mode de réalisation est représenté et expliqué sur les figures 2 à 4. Dans les deux cas, l'introduction du coin d'air entre les deux fronts d'onde s'obtient par l'emploi d'un cristal biréfringent. Dans ces deux cas, pour interférer les deux fronts d'onde polarisés orthogonalement, ces deux fronts d'onde passent par un polariseur commun mis entre le cristal biréfringent et le détecteur.

Dans le premier mode d'exécution, il a été omis de représenter le commutateur, ou composant, électro-optique permettant de faire tourner la polarisation d'un des fronts d'onde. Ainsi, il sera supposé que le matériau du milieu holographique 1 utilisé est anisotrope. Ces matériaux anisotropes, lorsqu'ils sont employés dans une configuration de diffraction anisotrope qui ne sera pas décrite plus avant ici car bien connue de l'homme du métier, ont pour conséquence que le faisceau diffracté est polarisé orthogonalement à la polarisation du faisceau objet. Dans ce cas, les deux fronts d'onde employés pour créer l'interférogramme sont polarisés orthogonalement sans nécessiter l'emploi d'un quelconque commutateur électro-optique.

Dans le mode de réalisation de la figure 1, le polariseur 2 a pour fonction de s'assurer que le faisceau incident sur le milieu holographique 1 est bien polarisé. L'objectif, ou lentille, 3 permet de former l'image de l'objet au voisinage du centre du biprisme biréfringent 4. Ce biprisme 4 est, par exemple, un biprisme de " Wallaston ", de " Rochon " ou de " Nomarski ", bien connus de l'homme du métier.

On choisit les polarisations orthogonales des deux fronts d'onde de telle sorte qu'elles correspondent aux deux lignes neutres du biprisme 4. Cela a pour effet d'introduire un angle entre les fronts d'onde. Les polarisations des deux fronts d'onde sont ensuite projetées sur un même polariseur 5. Le système optique formé des deux lentilles 6 et 7 permet de reformer l'image de l'objet 8 sur le détecteur 9, en l'occurrence la caméra de détection sur laquelle se forme l'interférogramme avec les franges de la porteuse. Le pas des franges de cette porteuse est défini par les caractéristiques du biprisme 4.

Pour que les franges soient localisées sur l'objet 8, le plan de séparation des faisceaux doit être situé au voisinage d'une image ce qui impose de mettre le biprisme 4 au voisinage d'une image de l'objet observé.

Dans le second mode de réalisation, les différents éléments présents dans le premier mode de réalisation sont également présents, mais au lieu d'employer un biprisme 4 mis au voisinage d'un plan image de l'objet 8, une lame biréfringente 10 qui est cette fois-ci placée, ou située, à l'infini (selon la compréhension optique du terme " infini ") par rapport à l'objet, l'infini étant ramené au foyer de la lentille 6 sur la figure 2.

Comme cela est illustré sur la figure 3, à chaque élément (pixel) de l'image est associé un cône de lumière 11. Dans le cas où la pupille optique serait située à l'infini, l'axe de ce cône est le même pour tous les pixels de l'image et est parallèle à l'axe z du montage.

À l'infini, donc dans le plan de la lame biréfringente 10, à chaque pixel correspond donc un pinceau de lumière parallèle. L'angle que fait ce pinceau de lumière avec l'axe z du montage dépend uniquement de la position du pixel suivant l'axe x.

La lame biréfringente 10, optiquement uniaxe d'axe x', est coupée de sorte que l'axe optique fasse un angle θ avec l'axe x du montage, comme représenté sur la figure 4, l'optimum se trouvant à θ = 45°.

Dans la figure 4, les axes x et z représentent les axes du montage tels qu'ils apparaissent sur la figure 3. Par ailleurs, x' est la direction de l'axe optique et la courbe 12 représente l'ellipsoïde des indices.

Ainsi, il est possible de montrer que la lame biréfringente 10 introduit entre les deux composantes de polarisation, c'est-à-dire suivant x et y définis sur la figure 3, un retard optique qui, au premier ordre, est proportionnel à l'angle β, donc proportionnel à la position Xo du pixel considéré. Dans le plan de la caméra 9, on obtient donc une porteuse dont les franges sont parallèles à l'axe y. Le pas de la porteuse dépend des caractéristiques de la lame, de son épaisseur, de la biréfringence et de sa coupe.

L'invention est décrite dans ce qui précède à titre d'exemple. Il est entendu que l'homme du métier est à même de réaliser différentes variantes de l'invention sans pour autant sortir du cadre du brevet.

## Revendications

1. Procédé pour la génération d'une porteuse dans un interférogramme, dans un dispositif d'interférométrie soit de type " interférométrie holographique en temps réel ", soit de type "interférométrie holographique double exposition ", comprenant une première étape d'enregistrement, sur un hologramme, d'un premier front d'onde en provenance d'un objet (8), la génération d'un second front d'onde, les deux fronts d'onde étant superposés, **caractérisé en ce que** les deux susdits fronts d'onde qui se superposent sont polarisés orthogonalement, soit naturellement soit par une étape de modification, et **en ce qu'**il comprend une étape de passage de ces deux fronts d'onde polarisés orthogonalement par un cristal biréfringent (4,10), un polariseur (5) et un détecteur (9) afin de faire interférer lesdits deux fronts d'onde.

2. Procédé selon la revendication 1, **caractérisé en ce que** le premier front d'onde est restitué, dans le cas de l'interférométrie « en temps réel », par relecture de l'hologramme par un faisceau de référence ; ce premier front d'onde se superposant au second front d'onde en provenance de l'objet (8) observé.

3. Procédé selon la revendication 1, **caractérisé en ce que** le second front d'onde est obtenu, dans le cas de l'interférométrie « double exposition », par enregistrement d'un nouveau front d'onde en provenance de l'objet (8).

4. Procédé selon l'une au moins des revendications précédentes, **caractérisé en ce que** l'étape de modification consiste en la modification de l'onde en provenance de l'objet (8) ou de l'onde du faisceau de référence dans le cas de l'interférométrie " en temps réel ", ou de l'un des deux faisceaux de référence dans le cas de l'interférométrie " double exposition ", grâce à un commutateur électro-optique ; cette modification de la polarisation d'une de ces ondes ayant lieu après l'enregistrement de l'hologramme.

5. Procédé selon la revendication 1, **caractérisé en ce que**, dans l'interférométrie « en temps réel », dans le cas où la polarisation est obtenue naturellement, le matériau holographique (1) utilisé dans le dispositif d'interférométrie est un matériau anisotrope.

6. Dispositif d'interférométrie pour la mise en oeuvre du procédé selon l'une des revendications précédentes pour la génération d'une porteuse dans un interférogramme, ledit dispositif étant de type « interférométrie holographique en temps réel » ou de type "interférométrie holographique double exposition ", ledit procédé comprenant une première étape d'enregistrement, sur un hologramme, d'un premier front d'onde en provenance d'un objet (8), la génération d'un second front d'onde, les deux fronts d'onde, polarisés orthogonalement, étant superposés, ledit dispositif comprenant une pluralité d'objectifs (3, 6, 7), ou lentilles, au moins un polariseur (5) sur lequel sont projetés les polarisations des deux fronts d'onde, au moins un milieu holographique (1), au moins un détecteur (9), **caractérisé en ce que** ledit dispositif comprend un cristal biréfringent (4,10) ; les deux fronts d'onde passant par ledit cristal (4,10) et le polariseur (5) afin de faire interférer lesdits deux fronts d'onde sur le détecteur (9).

7. Dispositif selon la revendication 6, **caractérisé en ce que** le cristal biréfringent (4,10) se présente sous la forme d'un biprisme biréfringent (4).

8. Dispositif selon la revendication 6, **caractérisé en ce que** le cristal biréfringent se présente sous la forme d'une lame biréfringente (10).

9. Dispositif selon la revendication 6, **caractérisé en ce que** la lame biréfringente (10) est située à l'infini, d'un point de vue optique, par rapport à l'objet (8) observé.

10. Dispositif selon la revendication 9, **caractérisé en ce que** le biprisme (4) est placé à proximité d'une image de l'objet (8).

## Patentansprüche

1. Verfahren zum Erzeugen einer Trägerwelle in einem Interferogramm in einer Interferometrievorrichtung entweder des Typs "holographische Interferometrie in Echtzeit", oder des Typs "holographische Interferometrie Doppelexposition", das einen ersten Aufzeichnungsschritt auf einem Hologramm einer ersten Wellenfront, die von einem Objekt (8) kommt, das Erzeugen einer zweiten Wellenfront, wobei die zwei Wellenfronten überlagert sind, umfasst, **dadurch gekennzeichnet, dass** die zwei Wellenfronten, die sich überlagern, entweder natürlich oder durch eine Änderungsstufe orthogonal polarisiert sind, und dass es einen Durchgangsschritt dieser zwei orthogonal polarisierten Wellenfronten durch einen zweifach brechenden Kristall (4, 10), einen Polarisator (5) und einen Detektor (9), um die zwei Wellenfronten interferieren zu lassen, umfasst.

2. Verfahren nach Anspruch 1, **dadurch gekennzeichnet, dass** die erste Wellenfront in dem Fall der Interferometrie "in Echtzeit" durch das Neulesen des Hologramms durch einen Bezugsstrahl wiedergegeben wird, wobei sich diese erste Wellenfront der zweiten Wellenfront, die von dem beobachteten Objekt (8) kommt, überlagert.

3. Verfahren nach Anspruch 1, **dadurch gekennzeichnet, dass** die zweite Wellenfront in dem Fall der Interferometrie "mit Doppelexposition" durch Aufzeichnen einer neuen Wellenfront, die von dem Objekt (8) kommt, erhalten wird.

4. Verfahren nach mindestens einem der vorhergehenden Ansprüche, **dadurch gekennzeichnet, dass** der Änderungsschritt in der Änderung der Welle, die von dem Objekt (8) oder der Welle des Bezugsstrahls in dem Fall der Interferometrie "in Echtzeit", oder von einem der zwei Bezugsstrahlen in dem Fall der Interferometrie "mit Doppelexposition" kommt, dank eines elektrooptischen Umschalters, wobei diese Änderung der Polarisierung einer dieser Wellen nach dem Aufzeichnen des Hologramms stattfindet.

5. Verfahren nach Anspruch 1, **dadurch gekennzeichnet, dass** bei der Interferometrie "in Echtzeit", in dem Fall, in dem die Polarisierung natürlich erhalten wird, das holographische Material (1), das in der Interferometrievorrichtung verwendet wird, ein anisotropes Material ist.

6. Interferometrievorrichtung zur Umsetzung des Verfahrens nach einem der vorhergehenden Ansprüche zum Erzeugen einer Trägerwelle in einem Interferogramm, wobei die Vorrichtung des Typs "holographische Interferometrie in Echtzeit" oder des Typs "holographische Interferometrie mit Doppelexposition" ist, wobei das Verfahren einen ersten Aufzeichnungsschritt auf einem Hologramm einer ersten Wellenfront umfasst, die von einem Objekt (8) kommt, das Erzeugen einer zweiten Wellenfront, wobei die zwei orthogonal polarisierten Wellenfronten überlagert sind, wobei die Vorrichtung mehrere Objektive (3, 6, 7) oder Linsen, mindestens einem Polarisator (5), auf den die Polarisationen der zwei Wellenfronten projiziert werden, mindestens ein holographisches Milieu (1), mindestens einen Detektor (9) umfasst, **dadurch gekennzeichnet, dass** die Vorrichtung einen doppelt brechenden Kristall (4, 10) umfasst, wobei die zwei Wellenfronten durch den Kristall (4, 10) und den Polarisator (5) durchgehen, um die zwei Wellenfronten auf dem Detektor (9) interferieren zu lassen.

7. Vorrichtung nach Anspruch 6, **dadurch gekennzeichnet, dass** der doppelt brechende Kristall (4, 10) die Form eines doppelt brechenden Biprismas (4) hat.

8. Vorrichtung nach Anspruch 6, **dadurch gekennzeichnet, dass** der doppelt brechende Kristall die Form einer doppelt brechenden Lamelle (10) hat.

9. Verfahren nach Anspruch 6, **dadurch gekennzeichnet, dass** die doppelt brechende Lamelle (10) aus optischer Sicht in Bezug auf den beobachteten Gegenstand (8) im Unendlichen liegt.

10. Vorrichtung nach Anspruch 9, **dadurch gekennzeichnet, dass** das Biprisma (4) in der Nähe eines Bilds des Objekts (8) platziert ist.

## Claims

1. A process for generating a carrier in an interferogram, in an interferometry device either of the "real-time holographic interferometry" type or of the "double-exposure holographic interferometry" type, comprising a first stage of recording a first wavefront on a hologram and coming from an object (8), and the generation of a second wavefront, these two wavefronts being superimposed, **characterized in that** the two above-cited superimposed wavefronts are polarized orthogonally, either naturally or by a modification stage, and **in that** it comprises a stage of the passage of these two wavefronts polarized orthogonally through a birefringent crystal (4 ; 10), a polarizer (5) and a detector (9) in order to make these two wavefronts interfere.

2. The process according to Claim 1, **characterized in that** the first wavefront is restored, in the case of "real-time" interferometry by readback of the hologram by a reference beam, which first wavefront is superimposed on the second wave front coming from the object (8) observed.

3. The process according to Claim 1, **characterized in that** the second wavefront is obtained, in the case of "double-exposure" interferometry, by recording a new wavefront coming from the object (8).

4. The process according to at least one of the preceding claims, **characterized in that** the modification stage consists of the modification of the wave coming from the object (8) or of the wave of the reference beam in the case of "real time" interferometry, or of one of the two reference beams in the case of "double-exposure" interferometry, by means of an electro-optical switch, which modification of the polarization of one of these waves takes place after the recording of the hologram.

5. The process according to Claim 1, **characterized in that** in "real-time" interferometry, in the case in which the polarization is obtained naturally, holographic material (1) used in the interferometry device is an anisotropic material.

6. An interferometry device for carrying out the process according to any one of the preceding claims for the generation of a carrier in an interferogram, said interferometry device being of the "real-time holographic interferometry" type or of the "double-exposure holographic interferometry" type, said process comprising a first stage of recording, on a hologram, of a first wavefront coming from an object (8), the generation of a second wavefront, these two wavefronts, polarized orthogonally, being superimposed, said device comprising a plurality of objectives (3 ; 6 ; 7), or lenses, at least one polarizer (5) in which polarizations of these two wavefronts are projected, at least one holographic environment (1), and at least one detector (9), **characterized in that** said device comprises a birefringent crystal (4 ; 10) and **in that** the two wavefronts pass through this crystal (4 ; 10) and the polarizer (5) in order to make these two wave fronts interfere on the detector (9).

7. The device according to Claim 6, **characterized in that** the birefringent crystal is in the form of a birefringent biprism (4).

8. The device according to Claim 6, **characterized in that** the birefringent crystal is in the form of a birefringent lamina (10).

9. The device according to Claim 6, **characterized in that** the birefringent lamina (10) is situated at infinity, from an optical viewpoint, relative to the object (8) observed.

10. The device according to Claim 9, **characterized in that** the biprism (4) is placed near an image of the object (8).
